# EUROPÄISCHE PATENTSCHRIFT

(11) **EP 0 418 935 B1**
(45) Veröffentlichungstag und Bekanntmachung des Hinweises auf die Patenterteilung: **03.11.1993**
(21) Anmeldenummer: 90201845.6
(22) Anmeldetag: 06.07.1990
(51) Int. Cl.: A01F 25/20

(54) **Hydrauliksystem für eine Schneidvorrichtung zum Ausschneiden von Silagegut oder dergleichen**
Hydraulic system for a cutting device for cutting silage or the like
Système hydraulique pour un dispositif de coupe pour découper du fourrage ensilé ou analogue

(30) Priorität: 30.08.1989 NL 8902189
(43) Veröffentlichungstag der Anmeldung: 27.03.1991
(73) Patentinhaber: LITECH B.V., NL-7521 PD Enschede (NL)
(72) Erfinder: Liet, Cornelis Hendricus, NL-7581 OJ Losser (NL)
(74) Vertreter: de Vries, Johannes Hendrik Fokke

(56) Entgegenhaltungen:
- DE-C- 3 201 690
- DE-C- 3 823 412
- NL-A- 8 702 040

## Beschreibung

Die Erfindung betrifft ein Hydrauliksystem für eine Schneidvorrichtung zum Ausschneiden von Silagegut oder dergleiche gemäss dem Ober begriff des Anspruches 1.

Ein solches Hydrauliksystem ist zum Beispiel aus der deutschen Patentschrift DE-B-32 01 690 bekannt. Ein solches Hydrauliksystem zeigt den Vorteil, dass zur Umkehrung der Schneidbewegung kein Umschaltschieber und Steuerleitungen benötigt sind dadurch, dass die Zylinder-Kolbeneinheit des Schneidmessers automatisch Schritt haltet mit der durch das Kurbelgetriebe angetriebenen Pumpzylinder-Kolbeneinheit. Weiterhin hat die Anwendung eines Kurbelgetriebes den Vorteil, dass die Pumpzylinder-Kolbeneinheit einem sinusoidal verlaufenden Oelstrom erzeugt, wodurch der Kolben der Zylinder-Kolbeneinheit des Schneidmessers automatisch mit niedriger Geschwindigkeit die Endstellung erreicht, sodass nahezu keine Stösse in der Schneidvorrichtung und keine Höchstdrücke auftreten, die das Oeffnen von einem Sicherheitsventil zur Folge haben. Die Geschwindigkeit der Zylinder-Kolbeneinheit des Schneidmessers und damit die Schneidgeschwindigkeit der Schneidvorrichtung sind dadurch hoch. Bei diesem Hydrauliksystem ist der Druck bei Passieren von dem oberen und unteren toten Punkt des Kurbelgetriebes ziemlich hoch, wodurch jeweils eine Stossbeanspruchung des Kurbelgetriebes verursacht wird. Bei dem bekannten Hydrauliksystem wird mit anderen Worten das Getriebe jeweils während kurzer Zeit durch die im Hydrauliksystem gespeicherte Energie angetrieben.

Die hierdurch verursachten Beanspruchungen sind nachteilig für die Lebensdauer des Getriebes und verursachen weiterhin ziemlich viel Lärm.

Aufgabe der Erfindung ist es ein Hydrauliksystem der obenerwähnten Art zu schaffen, wobei diese Nachteile in einfacher Weise aufgehoben sind.

Dazu wird das erfindungsgemässe Hydrauliksystem gekennzeichnet durch die Merkmale des kennzeichnenden Teiles des Anspruches

Hierdurch wird in zweckmässiger Weise verhindert, dass jeweils bei Passieren von dem oberen bzw. unteren toten Punkt des Kurbelgetriebes Oel infolge des Enddrucks zurückfliessen kann, sodass keine Stossbeanspruchungen in dem Getriebe mehr auftreten können.

Es ist bei einem Hydrauliksystem der erwähnten Art üblich, dass eine doppeltwirkende Hauptzylinder-Kolbeneinheit zur Auf- und Abwärtsbewegung von der Schneidvorrichtung angeordnet ist, welche Hauptzylinder-Kolbeneinheit über einen manuell betätigbaren Steuerschieber mit einer Parallelstellung, einer Kreuzstellung und einer Ruhestellung an eine Druck- und Rückleitung eines Hydraulikantriebs anschliessbar ist.

In diesem Fall ist gemäss einer bevorzugten Ausführung des erfindungsgemässen Hydrauliksystems der Inhalt des Zylinders der Hydraulikpumpe an wenigstens einer Seite des Kolbens grösser als der Inhalt der Zylinder-Kolbeneinheit an der entsprechenden Seite des Kolbens, wobei die erwähnte Seite des Zylinders der Hydraulikpumpe mit der für die Abwärtsbewegung der Schneidvorrichtung zu füllenden ersten Seite der Hauptzylinder-Kolbeneinheit gekoppelt ist. Dadurch wird in günstiger und kostengünstiger Weise für die Abwärtsbewegung der Schneidvorrichtung Sorge getragen.

Eine günstige Ausführung des erfindungsgemässen Hydrauliksystem wird gekennzeichnet durch ein Ventil, das zwischen eine Kurzschlusstellung, in der die Hydraulikpumpe kurzgeschlossen ist, und eine Arbeitsstellung, in der die Hydraulikpumpe mit der doppeltwirkenden Zylinder-Kolbeneinheit des Schneidmessers verbunden ist, schaltbar ist, wobei vorzugsweise das Ventil normalerweise in der Kurzschlusstellung geschaltet ist und in die Arbeitsstellung geschaltet wird, falls der Hydraulikdruck an der erwähnten ersten Seite der Hauptzylinder-Kolbeneinheit einen vorherbestimmten Wert überschreitet, und wobei vorzugsweise ein Detektor für die Drehzahl der angetriebenen Achse angeordnet ist, der bei Ueberschreiten von einer vorherbestimmten Drehzahl das Ventil in die Kurzschlusstellung schaltet oder geschaltet haltet.

In dieser Weise wird erreicht, dass das Messer nur angetrieben wird, falls die Schneidvorrichtung auf das Silagegut gedruckt wird. Weiterhin wird verhindert, dass die Bewegungsgeschwindigkeit des Schneidmessers zu hoch wird.

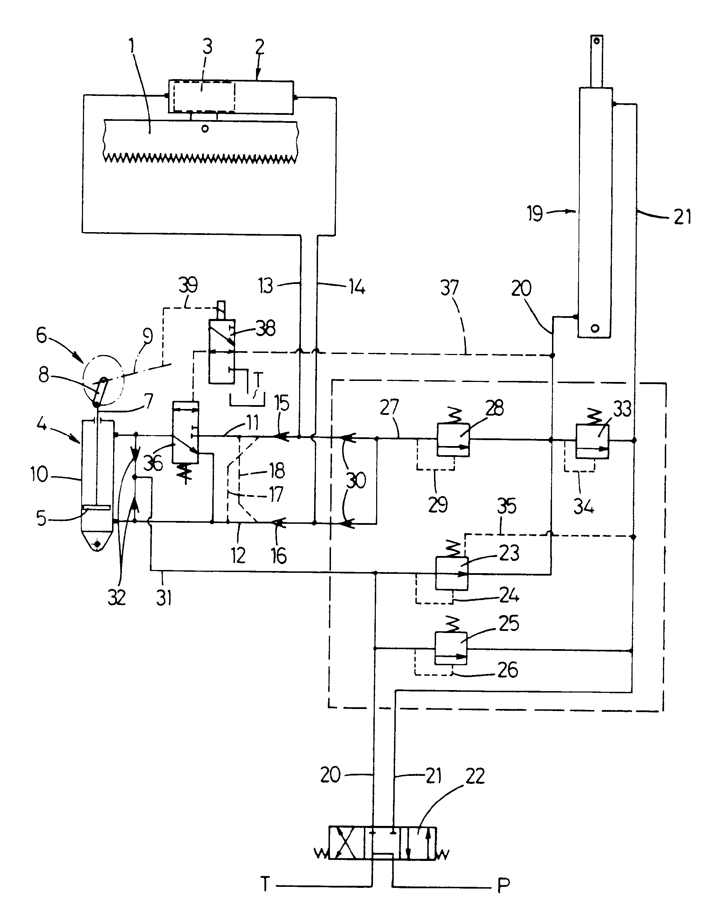

Die Erfindung wird an Hand der Zeichnung, in der ein Ausführungsbeispiel schematisch dargestellt ist, näher erläutert.

Das dargestellte Hydrauliksystem ist bestimmt für eine nicht weiter dargestellte Schneidvorrichtung zum Ausschneiden von Silagegut oder dergleiche, von welcher Schneidvorrichtung ein Schneidmesser 1 teilweise dargestellt ist. Im Fall von einer U-förmigen Schneidvorrichtung ist das Schneidmesser 1 zum Beispiel das auf dem Steg der U-förmigen Schneidvorrichtung hin und her bewegliche Schneidmesser und werden auch an den Schenkeln der Schneidvorrichtung hin und her beweglichen Schneidmesser angeordnet sein. Das Schneidmesser 1 kann durch eine schematisch dargestellte doppeltwirkende Zylinder-Kolbeneinheit 2, dessen Kolben 3 mit dem Schneidmesser 1 verbunden ist, angetrieben werden.

Zum Antrieb des Kolbens 3 ist eine als Hydraulikpumpe wirkende, doppelwirkende Zylinder-Kolbeneinheit 4 angeordnet, dessen Kolben 5 durch ein schematisch dargestelltes Kurbelgetriebe 6 angetrieben werden kann. Dazu ist der Kolben 5 durch eine Kolbenstange 7 mit dem einen Ende eines Kurbelarmes 8 gekoppelt, dessen anderen Ende mit einer schematisch dargestellten angetriebenen Achse 9 koppelbar ist. Diese kann zum Beispiel die Zapfwelle eines Schleppers sein.

Wie in der Zeichnung dargestellt ist, sind die beiden Seiten des Pumpzylinders 10 über Leitungen 11, 12 und 13, 14 mit den beiden Seiten der Zylinder-Kolbeneinheit 2 des Schneidmessers 1 verbunden. Wenn die Achse 9 jetzt über den Kurbelarm 8 den Kolben 5 betätigt, wird der Kolben 3 der Zylinder-Kolbeneinheit 2 automatisch mit dem Kolben 5 Schritt halten. Dadurch wird ein besonders einfacher hin und hergehender Antrieb des Schneidmessers 1 erreicht, wobei keine Steuerleitungen und Umschaltschieber benötigt sind. Durch die kreisförmige Bewegung der Kopplung des Kurbelarmes 8 mit der Kolbenstange 7 liefert die Pumpzylinder-Kolbeneinheit 4 überdies eine sinusoidal verlaufende Oel-Ausbeute, wodurch der Kolben 3 der Zylinder-Kolbeneinheit 2 beim Erreichen der Endstellung automatisch abgebremst wird und keine Stösse in der Schneidvorrichtung auftreten. Weiterhin treten hierdurch keine Höchstdrücke im Hydrauliksystem auf, die Oeffnen von Sicherheitsventile zur Folge haben. Hierdurch ist die Bewegungsgeschwindigkeit und damit die Schneidgeschwindigkeit der Schneidvorrichtung maximal.

Wenn die Schneidvorrichtung, wie obenerwähnt, noch mit zwei weiteren Schneidmessern versehen ist, können die zugehörigen doppeltwirkenden Zylinder-Kolbeneinheiten einfach parallel an den entsprechenden Seiten des Pumpzylinders 10 zum Beispiel über die Leitungen 13, 14 angeschlossen sein.

Obwohl beim beschriebenen Ausführungsbeispiel eine doppeltwirkende Zylinder-Kolbeneinheit angewandt wirdt, kann das Schneidmesser 1 selbstverständlich auch durch zwei einfachwirkende Zylinder-Kolbeneinheiten angetrieben werden, wobei jede einfachwirkende Zylinder-Kolbeneinheit mit einer zugehörigen Seite des Pumpzylinders 10 verbunden ist über die Leitung 11 bzw. 12. Ueberall wo eine doppeltwirkende Zylinder-Kolbeneinheit erwähnt wird, soll deshalb zugleich ein Paar einfachwirkender Zylinder-Kolbeneinheiten gelesen werden.

In den Leitungen 11 und 12 sind zugehörige Rückschlagventile 15 bzw. 16 aufgenommen, wobei das Rückschlagventil 15 über eine Steuerleitung 17 an der Leitung 12 und das Rückschlagventil 16 über eine Steuerleitung 18 an der Leitung 11 angeschlossen ist. Die Rückschlagventile 15, 16 verhindern, dass durch den in den Leitungen 11, 13 bzw. 12, 14 erzeugten Druck beim Passieren von dem oberen bzw. unteren toten Punkt des Kurbelarmes 8 Oel über die Leitung 11 bzw. 12 in den Hauptzylinder 10 zurückfliessen kann, wodurch eine Stossbeanspruchung auf die angetriebene Achse 9 ausgeübt werden würde. Die Steuerleitungen 17, 18 öffnen die Rückschlagventile 15, 16, alsbald bei weitergehender Drehung der angetriebenen Achse 9 wieder ein Druck in der Leitung 12 bzw. 11 aufgebaut wird.

Wie weiter in der Zeichnung gezeigt ist, umfasst das Hydrauliksystem eine Hauptzylinder-Kolbeneinheit 19 für die Auf- und Abwärtsbewegung der Schneidvorrichtung. Diese Hauptzylinder-Kolbeneinheit 19 ist über Hauptleitungen 20, 21 an den Ausgangen eines manuell betätigbaren Steuerschiebers 22 angeschlossen, über den die Hauptzylinder-Kolbeneinheit 19 an die Druck- und Rückleitung P bzw. T eines Hydraulikgetriebes anschliessbar ist, zum Beispiel die Druck- und Rückleitung eines Schleppers. Der Steuerschieber 22 ist in der Ruhestellung gezeigt, in der die Hauptzylinder-Kolbeneinheit 19 nicht an der Druckleitung P angeschlossen ist. Der Steuerschieber 22 hat weiterhin eine Parallel- und eine Kreuzstellung. Durch den Steuerschieber 22 manuell in die Parallelstellung zu verstellen, wird die Druckleitung P an die Hauptleitung 21 angeschlossen, wodurch der Kolben der Hauptzylinder-Kolbeneinheit 19 in die gezeigte eingezogene Stellung verstellt wird, in welcher Stellung die Schneidvorrichtung sich in seiner höchsten Stellung befindet. Zum Ausschneiden eines Teils des Silageguts aus dem Silagegutvorrat mit der Schneidvorrichtung wird der Steuerschieber 22 in die Kreuzstellung verstellt, sodass die Druckleitung P an die Leitung 20 angeschlossen wird. In der Leitung 20 ist ein normal geöffnetes Ventil 23 angeordnet, sodass der nicht sichtbare Kolben der Hauptzylinder-Kolbeneinheit auswärts gedruckt wird, solang die Schneidvorrichtung nicht auf Widerstand stosst. Alsbald die Schneidvorrichtung auf das Silagegut stosst, wird der Druck in der Leitung 20 zunehmen und bei einem vorher bestimmten Schwellenwert, zum Beispiel 10 Bar, wird das Ventil durch diesen Druck über eine Steuerleitung 24 geschlossen. Bei zunehmendem Druck in der Leitung 20 öffnet dann ein Ventil 25, das normalerweise geschlossen ist, jedoch bei einem vorherbestimmten Druck in der Leitung 20, zum Beispiel 20 Bar, über eine Steuerleitung 26 geöffnet wird. Hierdurch wird die Leitung 20 mit der Leitung 21 verbunden.

Die weitere Oelspeisung der Hauptzylinder-Kolbeneinheit 19 erfolgt beim beschriebenen Hydrauliksystem mit Vorteil gleichfalls durch die Pumpzylinder-Kolbeneinheit 4. Dazu ist der Inhalt des Pumpzylinders 10 beidseitig von dem Kolben 5 grösser gewählt als der Inhalt der Zylinder-Kolbeneinheit 2 beidseitig von dem Kolben 3. Das dadurch bei jedem aufwärtsen und abwärtsen Hub des Kolbens 5 verfügbare überflüssige Oel wird an eine gemeinsame Leitung 27 zugeführt, die über ein Ventil 28 mit der Leitung 20 verbunden ist. Das Ventil 28 ist normal geschlossen und wird durch eine Steuerleitung 29 geöffnet, wenn der Druck in der gemeinsamen Leitung 27 einen vorherbestimmten Wert, zum Beispiel 170 Bar, überschreitet. In der Leitungen 11, 12 sind vor dem Anschluss an der gemeinsamen Leitung 27 noch zugehörige Rückschlagventile 30 aufgenommen. Wenn jetzt während des Schneiden der Kolben 3 eine Endstellung erreicht, wird der Druck in der Leitung 27 rasch ansteigen und kann der Oelüberschuss über die Leitung 27 und das Ventil 28 an die Hauptzylinder-Kolbeneinheit 19 geliefert werden, sodass dessen Kolben derart verstellt wird, dass die Schneidvorrichtung abwärts verstellt wird. Das Ventil 28 gewährleistet dabei, dass die Hauptzylinder-Kolbeneinheit 19 erst angetrieben wird, nachdem der Kolben 3 eine Endstellung erreicht hat.

Das dadurch jeweils aus dem Pumpzylinder 10 abgeführte Oel wird wieder zugeführt über eine an der Leitung 20 angeschlossene Leitung 31, die über zwei Rückschlagventile 32 mit den Leitungen 11, 12 verbunden ist. Das aus der Hauptzylinder-Kolbeneinheit 19 gedruckte Oel läuft über die Leitung 21 und den sich in der Kreuzstellung befindende Steuerschieber 22 zu die Rückleitung T.

Wenn während des Schneidvorgangs die Schneidvorrichtung die untere Stellung erreicht, wird der Druck in der Leitung 27 hinter dem Ventil 28 ansteigen, wodurch ein Ueberdruckventil 33 geöffnet wird, das zwischen den Leitungen 20 und 21 angeschlossen ist. Dieses Ueberdruckventil 33 ist normal geschlossen und wird durch den erhöhten Druck bei zum Beispiel 210 Bar, über eine Steuerleitung 34 geöffnet.

Schliesslich ist beim beschriebenen Ausführungsbeispiel des Hydrauliksystems noch eine Steuerleitung 35 anwesend, die das Ventil 23 öffnet, alsbald in der Leitung 21 einen Druck auftritt, wodurch die gesamte Leitung 20 mit der Rückleitung T verbunden wird.

Bei der dargestellten Ausführung ist in der Leitung 11 ein Ventil 36 angeordnet, das zwischen eine in der Zeichnung gezeigte Kurzschlusstellung, in der die Pumpzylinder-Kolbeneinheit 4 kurzgeschlossen ist, und eine Arbeitsstellung, in der die Pumpzylinder-Kolbeneinheit 4 über die Leitungen 11, 12 und 13, 14 mit der doppelwirkenden Zylinder-Kolbeneinheit 2 verbunden ist, schaltbar ist. Die Betätigung des Ventils 36 geschieht über eine Steuerleitung 37, die an der Leitung 20 angeschlossen ist. Wie in der Zeichnung gezeigt ist, befindet das Ventil sich normal in der gezeigten Kurzschlusstellung durch die Wirkung einer schematisch dargestellten Feder. Alsbald in der Leitung 20 und damit an der ersten Seite der Pumpzylinder-Kolbeneinheit 19 einen Druck aufgebaut wird, wird das Ventil 36 in die Arbeitsstellung geschaltet, sodass die Zylinder-Kolbeneinheit 2 anfängt das Messer 1 anzutreiben. Dadurch wird erreicht, dass das Schneidmesser 1 nur angetrieben wird, falls die Schneidvorrichtung auf das Silagegut gedruckt wird. Um eine zu höhe Geschwindigkeit des Schneidmessers 1 zu vermeiden, ist ein Detektor für die Drehzahl der angetriebenen Achse 9 angeordnet, welcher Detektor ein Ventil 38 betätigt, wie schematisch durch eine Strichlinie angegeben ist. Dieses Ventil 38 ist in der Steuerleitung 37 des Ventils 36 aufgenommen und befindet sich normal in einer Stellung, in der die Steuerleitung 37 das Ventil 36 betätigen kann. Wenn die Drehzahl der Achse 9 einen vorherbestimmten Wert überschreitet, wird das Ventil 38 betätigt, wodurch die Steuerleitung 37 unterbrochen wird und der Druck an der Seite des Ventils 36 zu die Rückleitung T abfliessen kann, wie schematisch dargestellt ist. Dadurch wird bei Ueberschreiten von dieser vorherbestimmten Drehzahl die Pumpzylinder-Kolbeneinheit 4 kurzgeschlossen. In der Ruhestellung des Steuerschiebers 22 ist die Leitung 20 mit der Rückleitung T verbunden, sodass der Druck in der Leitung 20 ausfällt und das Ventil 36 in die Kurzschlusstellung verstellt wird.

Aus dem Obenstehenden wird klar sein, dass die Erfindung ein Hydrauliksystem schafft, dass relativ einfach aufgebaut ist und mit dem in günstiger Weise ein hin- und hergehender Antrieb der Zylinder-Kolbeneinheit 2 erreicht wird ohne aufwendige Zusatzmittel wie Steuerleitungen und Umschaltschieber. Ueberdies treten in dem Hydrauliksystem bei der Umkehrung der Bewegung von dem Kolben 3 der Zylinder-Kolbeneinheit 2 keine Höchstdrücke auf, die Oeffnen von Sicherheitsventile erzeugen, was anders bei den bekannten Hydrauliksystemen eine erhebliche Erniedrigung der Bewegungsgeschwindigkeit zur Folge hat. Weiterhin kann in einfacher Weise die Hauptzylinder-Kolbeneinheit für die Abwärtsbewegung der Schneidvorrichtung gespeisst werden. Weiterhin wird in zweckmässiger Weise verhindert, dass das Getriebe Stossbeanspruchungen erfahrt durch den in den Leitungen 11-14 aufgebauten Druck bei Passieren von der oberen und unteren toten Punkt dieses Getriebes. Durch Anwendung der Ventile 36 und 38 wird eine lange Lebensdauer des Hydraulikantriebs und des Schneidmessers 1 gewährleistet dadurch, dass ein unnötiger Antrieb und zu höhe Bewegungsgeschwindigkeiten vermieden werden.

Die Erfindung ist nicht beschränkt auf die im Obenstehenden beschriebene Ausführung, die im Rahmen der Ansprüche in verschiedenen Weisen abgeändert werden können.

## Patentansprüche

1. Hydrauliksystem für eine Schneidvorrichtung zum Ausschneiden von Silagegut oder dergleichen mit wenigstens einer doppeltwirkenden Zylinder-Kolbeneinheit (2) zum Antrieb von einem hin und her beweglichen Schneidmesser (1) der Schneidvorrichtung, einer als Hydraulikpumpe arbeitenden, doppeltwirkenden Zylinder-Kolbeneinheit (4) und einem Kurbel- oder ähnlichen exzentrischen Getriebe (6) zum Antrieb des Kolbens (5) der Hydraulikpumpe, welches Getriebe mit einer angetriebenen Achse (9) koppelbar ist, wobei die beiden Seiten der Hydraulikpumpe hydraulisch mit den beiden Seiten der doppeltwirkenden Zylinder-Kolbeneinheit (2) des Schneidmessers verbunden sind, **dadurch gekennzeichnet,** daß in jeder der beiden Verbindungen (11, 12) zwischen der Hydraulikpumpe (4) und der Zylinder-Kolbeneinheit (2) des Schneidmessers (1) ein zugehöriges Rückschlagventil (15, 16) angeordnet ist, das über eine Steuerleitung (17, 18) an der anderen Verbindung (12, 11) zwischen dem Zylinder (10) der Hydraulikpumpe und dem in dieser anderen Verbindung angeordneten Rückschlagventil angeschlossen ist, wobei jedes Rückschlagventil (15, 16) durch einen in der anderen Verbindung auftretenden Druck geöffnet wird.

2. Hydrauliksystem gemäß Anspruch 1, wobei eine doppeltwirkende Hauptzylinder-Kolbeneinheit (19) zur Auf- und Abwärtsbewegung der Schneidvorrichtung angeordnet ist, welche Hauptzylinder-Kolbeneinheit über einen manuell betätigbaren Steuerschieber (22) mit einer Parallelstellung, einer Kreuzstellung und einer Ruhestellung an eine Druck- und Rückleitung (P, T) eines Hydraulikantriebs anschließbar ist, **dadurch** **gekennzeichnet**, daß der Inhalt des Zylinders (10) der Hydraulikpumpe (4) an wenigstens einer Seite des Kolbens größer als der Inhalt der Zylinder-Kolbeneinheit (2) an der entsprechenden Seite des Kolbens ist, wobei die erwähnte Seite des Zylinders der Hydraulikpumpe mit der für die Abwärtsbewegung der Schneidvorrichtung zu füllenden ersten Seite der Hauptzylinder-Kolbeneinheit (19) gekoppelt ist.

3. Hydrauliksystem gemäß Anspruch 2, **dadurch** **gekennzeichnet,** daß der Zylinder (10) der Hydraulikpumpe des Kolbens einen größeren Inhalt als derselben der Zylinder-Kolbeneinheit (2) hat, wobei die beiden Seiten dieses Zylinders über ein zugehöriges Rückschlagventil (30) an einer gemeinsamen Leitung (27) angeschlossen sind, die über ein erstes Ventil (28), das normalerweise geschlossen ist und bei einem vorherbestimmten, ersten Überdruck in die gemeinsame Leitung öffnet, mit der ersten Seite der Hauptzylinder-Kolbeneinheit (19) verbunden ist.

4. Hydrauliksystem gemäß Anspruch 3, **dadurch** **gekennzeichnet,** daß zwischen den beiden Seiten der Hauptzylinder-Kolbeneinheit (19) einen zweiten Überdruckventil (33) angeordnet ist, das normalerweise geschlossen ist und bei einem vorherbestimmten, höheren als der erste Überdruck zweiten Überdruck in der gemeinsamen Leitung (27) öffnet.

5. Hydrauliksystem gemäß Anspruch 2, 3 oder 4, **dadurch gekennzeichnet**, daß ein erster Ausgang des Steuerschiebers (22) über ein drittes Ventil (23) an die erste Seite der Hauptzylinder-Kolbeneinheit (19) angeschlossen ist, welches dritte Ventil normalerweise geöffnet ist und bei einem vorherbestimmten dritten Überdruck an der an dem ersten Ausgang des Steuerschiebers (22) angeschlossenen Seite schließt.

6. Hydrauliksystem gemäß Anspruch 5, **dadurch** **gekennzeichnet,** daß das dritte Ventil (23) durch eine Steuerleitung (35) mit der zweiten Seite der Hauptzylinder-Kolbeneinheit (19) verbunden ist, wobei das dritte Ventil bei einem Überdruck an dieser zweiten Seite der Hauptzylinder-Kolbeneinheit öffnet.

7. Hydrauliksystem gemäß Anspruch 5 oder 6, **dadurch** **gekennzeichnet,** daß zwischen dem ersten Ausgang und einem zweiten Ausgang des Steuerschiebers (22) ein viertes Ventil (25) angeordnet ist, das normalerweise geschlossen ist und öffnet bei einem vierten Überdruck an der an dem ersten Ausgang des Steuerschiebers angeschlossenen Seite, welcher vierte Überdruck größer ist als der dritte Überdruck.

8. Hydrauliksystem gemäß einem der Ansprüche 2-7, **gekennzeichnet durch** ein weiteres Ventil (36), das zwischen eine Kurzschlußstellung, in der die Hydraulikpumpe kurzgeschlossen ist, und eine Arbeitsstellung, in der die Hydraulikpumpe mit der (jeder) doppeltwirkenden Zylinder- Kolbeneinheit (2) des Schneidmessers verbunden ist, schaltbar ist, wobei das weitere Ventil (36) normalerweise in der Kurzschlußstellung geschaltet ist und in die Arbeitsstellung geschaltet wird, falls der Hydraulikdruck an der erwähnten ersten Seite der Hauptzylinder-Kolbeneinheit (19) einen vorherbestimmten Wert überschreitet.

9. Hydrauliksystem gemäß Anspruch 8, **dadurch** **gekennzeichnet,** daß ein Detektor für die Drehzahl der angetriebenen Achse (9) angeordnet ist, der bei Überschreiten von einer vorherbestimmten Drehzahl das weitere Ventil (36) in die Kurzschlußstellung schaltet oder geschaltet haltet.

10. Hydrauliksystem gemäß Anspruch 9, **dadurch** **gekennzeichnet**, daß das weitere Ventil (36) durch eine Steuerleitung mit der erwähnten ersten Seite der Hauptzylinder-Kolbeneinheit (19) verbunden ist, wobei in dieser Steuerleitung ein durch den Detektor betätigtes Ventil (38) angeordnet ist.

11. Hydrauliksystem gemäß einem der vorhergehenden Ansprüche, **dadurch gekennzeichnet,** daß zwei oder mehr doppeltwirkende, zum Antrieb zugehöriger Schneidmesser (1) bestimmte Zylinder-Kolbeneinheiten (2) parallel an den respektiven Seiten der Hydraulikpumpe (4) angeschlossen sind.

12. Hydrauliksystem gemäß einem der vorhergehenden Ansprüche, **dadurch gekennzeichnet**, daß die beiden Seiten der Hydraulikpumpe (4) jede über ein Rückschlagventil (32) mit einer Hydraulikdruckquelle (31) koppelbar sind.

## Claims

1. Hydraulic system for a cutting device for cutting silage or similar materials, having at least one double-action cylinder/piston unit (2) for driving a reciprocating cutting blade (1) of the cutting device, a double-action cylinder/piston unit (4) operating as a hydraulic pump and a crank mechanism or similar eccentric mechanism (6) for driving the piston (5) of the hydraulic pump, said mechanism being connectable to a driven axle (9), the two sides of the hydraulic pump being hydraulically connected to the two sides of the double-action cylinder/piston unit (2) of the cutting blade, **characterized in that** there is disposed in each of the two connections (11, 12) between the hydraulic pump (4) and the cylinder/piston unit (2) of the cutting blade (1) an associated non-return valve (15, 16) which is connected via a control line (17, 18) to the other connection (12, 11) between the cylinder (10) of the hydraulic pump and the non-return valve disposed in said other connection, each non-return valve (15, 16) being opened by a pressure arising in the other connection.

2. Hydraulic system according to claim 1, wherein a double-action main cylinder/piston unit (19) is provided for moving the cutting device up and down, which main cylinder/piston unit is connectable via a manually actuable slide valve (22) having a parallel position, a cross position and a home position to a pressure line and return line (P, T) of a hydraulic operating mechanism, **characterized in that** the content of the cylinder (10) of the hydraulic pump (4) at at least one side of the piston is greater than the content of the cylinder/piston unit (2) at the corresponding side of the piston, said side of the cylinder of the hydraulic pump being coupled to the first side of the main cylinder/piston unit (19) to be filled for the downward movement of the cutting device.

3. Hydraulic system according to claim 2, **characterized in that** the cylinder (10) of the hydraulic pump of the piston has a greater content than that of the cylinder/piston unit (2), the two sides of said cylinder each being connected via a non-return valve (30) to a common line (27) which is connected to the first side of the main cylinder/piston unit (19) via a first valve (28), which is normally closed and opens in the event of a predetermined first overpressure into the common line.

4. Hydraulic system according to claim 3, **characterized in that** disposed between the two sides of the main cylinder/piston unit (19) is a second pressure relief valve (33) which is normally closed and opens in the event of a predetermined second overpressure, higher than the first overpressure, in the common line (27).

5. Hydraulic system according to claim 2, 3 or 4, **characterized in that** a first outlet of the slide valve (22) is connected to the first side of the main cylinder/piston unit (19) via a third valve (23), which is normally open and closes in the event of a predetermined third overpressure at the side connected to the first outlet of the slide valve (22).

6. Hydraulic system according to claim 5, **characterized in that** the third valve (23) is connected by a control line (35) to the second side of the main cylinder/piston unit (19), the third valve opening in the event of an overpressure at said second side of the main cylinder/piston unit.

7. Hydraulic system according to claim 5 or 6, **characterized in that** disposed between the first outlet and a second outlet of the slide valve (22) is a fourth valve (25), which is normally closed and opens in the event of a fourth overpressure at the side connected to the first outlet of the slide valve, said fourth overpressure being greater than the third overpressure.

8. Hydraulic system according to one of claims 2 to 7, **characterized by** a further valve (36) which may be switched between a short-circuit position, in which the hydraulic pump is short-circuited, and a working position, in which the hydraulic pump is connected to the (each) double-action cylinder/piston unit (2) of the cutting blade, the further valve (36) normally being in the short-circuit position and being switched into the working position in the event that the hydraulic pressure at said first side of the main cylinder/piston unit (19) exceeds a predetermined value.

9. Hydraulic system according to claim 8, **characterized in that** a detector for the rotational speed of the driven axle (9) is provided and, in the event that a predetermined rotational speed is exceeded, switches the further valve (36) into the short-circuit position or keeps said valve switched in said position.

10. Hydraulic system according to claim 9, **characterized in that** the further valve (36) is connected to said first side of the main cylinder/piston unit (19) by a control line, in which a valve (38) actuated by a detector is disposed.

11. Hydraulic system according to one of the preceding claims, **characterized in that** two or more double-action cylinder/piston units (2) for operating associated cutting blades (1) are connected in parallel to the respective sides of the hydraulic pump (4).

12. Hydraulic system according to one of the preceding claims, **characterized in that** the two sides of the hydraulic pump (4) are each connectable via a non-return valve (32) to a hydraulic pressure source (31).

## Revendications

1. Système hydraulique pour un dispositif de coupe destiné à découper du fourrage ensilé ou similaire, comportant au moins une unité à cylindre et piston (2) à double effet pour l'entraînement d'une lame de coupe (1), déplacée dans un mouvement de va-et-vient, du dispositif de coupe, une unité à cylindre et piston (4) à double effet, fonctionnant comme une pompe hydraulique ainsi qu'une transmission à manivelle ou transmission (6) excentrique similaire pour l'entraînement du piston (5) de la pompe hydraulique, laquelle transmission peut être couplée avec un axe (9) entraîné, les deux côtés de la pompe hydraulique étant reliés aux deux côtés de l'unité à cylindre et piston (2) à double effet de la lame de coupe, caractérisé en ce que dans chacune des deux liaisons (11, 12) entre la pompe hydraulique (4) et l'unité à cylindre et piston (2) de la lame de coupe (1), il est prévu une soupape antiretour (15, 16) respective, qui est raccordée, par une ligne de commande (17, 18), à l'autre liaison (12, 11) entre le cylindre (10) de la pompe hydraulique et la soupape antiretour montée dans cette autre liaison, chaque soupape antiretour (15, 16) étant ouverte par une pression se produisant dans l'autre liaison.

2. Système hydraulique selon la revendication 1 dans lequel une unité principale à cylindre et piston (16) à double effet est prévue pour le mouvement de montée et de descente du dispositif de coupe, laquelle unité principale à cylindre et piston peut être raccordée, par un coulisseau de commande (22), actionnable manuellement, avec une position parallèle, une position croisée et une position de repos, à un conduit de pression et de retour (P, T) d'un entraînement hydraulique, caractérisé en ce que la capacité du cylindre (10) de la pompe hydraulique (4) sur un côté au moins du piston est supérieure à la capacité de l'unité à cylindre et piston (2) sur le côté correspondant du piston, le côté mentionné du cylindre de la pompe hydraulique étant couplé avec le premier côté, à remplir pour le mouvement de descente du dispositif de coupe, de l'unité principale à cylindre et piston (19).

3. Système hydraulique selon la revendication 2, caractérisé en ce que le cylindre (10) de la pompe hydraulique du piston a une plus grande capacité que celui de l'unité à cylindre et piston (2), les deux côtés de ce cylindre étant raccordés, par une soupape antiretour (30) respective, à un conduit (27) commun qui est relié, par une première soupape (28) laquelle est normalement fermée et s'ouvre pour une première surpression prédéterminée dans le conduit commun, avec le premier côté de l'unité principale à cylindre et piston (19).

4. Système hydraulique selon la revendication 3, caractérisé en ce qu'entre les deux côtés de l'unité à cylindre et piston (19) il est prévu une deuxième soupape de surpression (33) qui est normalement fermée et qui s'ouvre pour une deuxième surpression prédéterminée, supérieure à la première, dans le conduit commun (27).

5. Système hydraulique selon les revendications 2, 3 ou 4, caractérisé en ce qu'une première sortie du coulisseau de commande (22) est raccordée, par une troisième soupape (23), au premier côté de l'unité à cylindre et piston (19), laquelle troisième soupape est normalement ouverte et se ferme pour une troisième surpression prédéterminée sur le côté raccordé à la première sortie du coulisseau de commande (22).

6. Système hydraulique selon la revendication 5, caractérisé en ce que la troisième soupape (23) est reliée par une ligne de commande (35) avec le deuxième côté de l'unité principale à cylindre et piston (19), la troisième soupape s'ouvrant pour une surpression sur ce deuxième côté de l'unité principale à cylindre et piston.

7. Système hydraulique selon les revendications 5 ou 6, caractérisé en ce qu'entre la première sortie et une deuxième sortie du coulisseau de commande (22) il est prévu une quatrième soupape (25) qui est normalement fermée et qui s'ouvre pour une quatrième surpression sur le côté raccordé à la première sortie du coulisseau de commande, laquelle quatrième surpression est supérieure à la troisième surpression.

8. Système hydraulique selon l'une des revendications 2 à 7, caractérisé par une autre soupape (36) qui peut commuter entre une position de court-circuit, dans laquelle la pompe hydraulique est court-circuitée, et une position de travail dans laquelle la pompe hydraulique est reliée avec la (chaque) unité à cylindre et piston (2) à double effet de la lame de coupe, l'autre soupape (36) étant normalement en position de court-circuit et commutant dans la position de travail dans le cas où la pression hydraulique sur le premier côté mentionné de l'unité principale à cylindre et piston (19) dépasse une valeur prédéterminée.

9. Système hydraulique selon la revendication 8, caractérisé en ce qu'il est prévu un détecteur pour la vitesse de rotation de l'axe (9) entraîné, qui en cas de dépassement d'une vitesse de rotation prédéterminée, fait passer l'autre soupape (36) dans la position de court-circuit ou la maintient commutée.

10. Système hydraulique selon la revendication 9, caractérisé en ce que l'autre soupape (36) est reliée par une ligne de commande avec le premier côté mentionné de l'unité principale à cylindre et piston (19), une soupape (38) actionnée par le détecteur étant prévue dans cette ligne de commande.

11. Système hydraulique selon l'une des revendications précédentes, caractérisé en ce que deux unités à cylindre et piston (2) ou plus, à double effet, destinées à l'entraînement de lames de coupe (1) correspondantes, sont raccordées parallèlement aux côtés respectifs de la pompe hydraulique (4).

12. Système hydraulique selon l'une des revendications précédentes, caractérisé en ce que les deux côtés de la pompe hydraulique (4) peuvent être couplés chacun par une soupape antiretour (32) avec une source de pression hydraulique (31).
